# FASCICULE DE BREVET EUROPEEN

(11) **EP 1 671 849 B1**
(45) Date de publication et mention de la délivrance du brevet: **23.04.2008**
(21) Numéro de dépôt: 05292611.0
(22) Date de dépôt: 08.12.2005
(51) Int. Cl.: B60R 19/18

(54) **Poutre pour pare-chocs de véhicule automobile, et châssis de véhicule associé**
Träger für Kraftfahrzeug-Stossfänger und Fahrzeugrahmen mit einem solchen Träger
Bumper beam for a vehicle and vehicle frame assembly including such a beam

(30) Priorité: 14.12.2004 FR 0413293
(43) Date de publication de la demande: 21.06.2006
(73) Titulaire: Faurecia Bloc Avant, 92000 Nanterre (FR)
(72) Inventeur: Lentz, Michel, 25400 Exincourt (FR)
(74) Mandataire: Domenego, Bertrand

(56) Documents cités:
- EP-A- 1 479 568
- WO-A-94/27840
- FR-A- 2 835 792

## Description

La présente invention concerne une poutre pour pare-chocs de véhicule automobile, du type décrit dans le préambule de la revendication 1.

On connaît de WO-A-94/27840, une poutre du type précité, dans laquelle l'âme de rigidification est située sensiblement à mi-hauteur sur la paroi extérieure et sur la paroi intérieure.

FR-A-2 835 792 et DE 814 333 décrivent des poutres du type précité.

Pour répondre aux normes de sécurité en cas de choc d'un piéton contre un véhicule automobile, la poutre du type précité doit être fixée sur la caisse du véhicule de telle sorte que l'âme de rigidification est placée à une hauteur prédéterminée par rapport au sol, qui correspond sensiblement à la hauteur du genou du piéton par rapport au sol.

A cet effet, la poutre précitée ne donne pas entière satisfaction. En effet, la hauteur de l'âme centrale par rapport au sol est imposée par la hauteur à laquelle la poutre est fixée sur la caisse du véhicule. Compte tenu des différentes versions possibles de véhicules, par exemple véhicule « tout terrain », véhicule de type « coupé » ou « berline », qui présentent des hauteurs de caisse différentes, il est nécessaire de modifier la structure de la poutre en fonction du type de véhicule ou d'adapter sa fixation sur le véhicule. Le coût du pare-chocs est donc augmenté.

Un but de l'invention est donc de disposer d'une poutre pour pare-chocs de véhicule automobile qui peut s'adapter à différents types de véhicule, sans augmenter le coût du pare-chocs.

A cet effet, l'invention a pour objet une poutre selon la revendication 1.

La poutre selon l'invention peut comprendre l'une ou plusieurs des caractéristiques des revendications 2 à 6, prise(s) isolément ou selon toutes combinaisons techniquement possibles.

L'invention a en outre pour objet un châssis de véhicule automobile, selon la revendication 7.

L'invention a en outre pour objet un procédé de montage selon la revendication 8.

Un exemple de réalisation de l'invention va maintenant être décrit en regard des dessins annexés, sur lesquels :
- la Figure 1 est une vue schématique de côté en coupe partielle d'une poutre selon l'invention, fixée sur un premier châssis de véhicule automobile ;
- la Figure 2 est une vue en perspective de trois-quarts face de la poutre selon l'invention ;
- la Figure 3 est une vue agrandie d'une coupe transversale de la poutre de la Figure 2 ; et
- la Figure 4 est une vue analogue à la Figure 1, la poutre étant fixée sur un deuxième châssis de véhicule automobile.

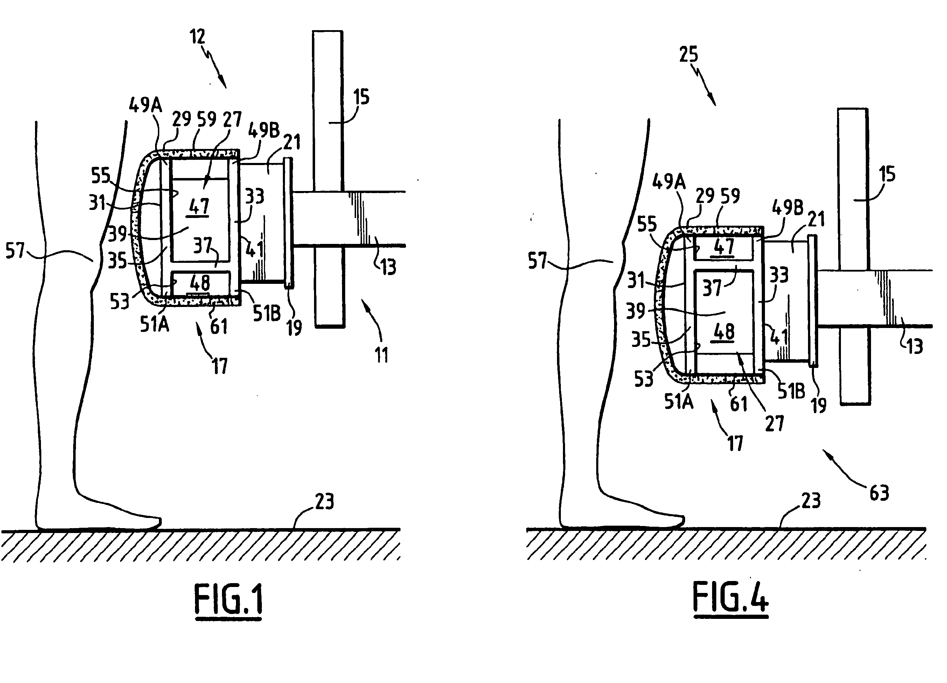

La Figure 1 représente, en vue de côté, une partie avant du châssis 11 d'un véhicule automobile 12 par exemple de type « tout-terrain ».

Le châssis 11 comprend deux longerons 13 parallèles qui s'étendent suivant une direction longitudinale par rapport au véhicule, une face avant 15 montée entre les longerons 13, et un pare-chocs 17 fixé à l'avant des longerons 13 et qui s'étend suivant une direction transversale par rapport au véhicule. Un seul longeron 13 est visible sur la Figure 1.

Chaque longeron 13 comporte à son extrémité avant une plaque terminale 19 de fixation du pare-chocs 17, à l'avant de laquelle est monté un absorbeur de choc 21.

La face avant 15 est fixée par ses bords latéraux entre les deux longerons 13 et s'étend verticalement entre ces longerons 13.

Dans l'exemple représenté sur la Figure 1, les longerons 13, ainsi que la face avant 15, sont situés à une hauteur relativement plus élevée par rapport au sol 23 que ceux du châssis 25 d'un véhicule, par exemple de type « coupé », représenté sur la Figure 4.

Le pare-chocs 17 comprend une poutre 27 fixée à l'avant de l'absorbeur de choc 21 et une peau extérieure 29 d'aspect, qui couvre la poutre 27 à l'avant, au-dessus, et en dessous de cette poutre 27.

La poutre 27 de pare-chocs est constituée par un profilé 31 longitudinal d'absorption mécanique de choc qui présente une section transversale en forme générale de H.

Dans tout ce qui suit, les termes « longitudinal » et « transversal » s'entendent par rapport à la plus grande dimension de la poutre 27. Cette plus grande dimension s'étend sensiblement suivant une direction transversale par rapport au véhicule 11 lorsque la poutre 27 est fixée sur les longerons 13.

La poutre 27 est par exemple réalisée par injection d'un matériau plastique dans un moule.

Dans tout ce qui suit, les termes « avant », « arrière », « vertical », « horizontal », « intérieur », « extérieur », « haut », « bas » « supérieur » et « inférieur » s'entendent par rapport aux orientations habituelles d'un véhicule automobile.

Le profilé 31 comprend une paroi intérieure ou arrière 33 sensiblement verticale, à droite sur la Figure 1, une paroi extérieure ou avant 35 sensiblement verticale, à gauche sur la Figure 1, une âme de rigidification 37 sensiblement horizontale, et des nervures verticales 39 de renfort reliant la paroi intérieure 33 à la paroi extérieure 35.

Les parois extérieure 35 et paroi intérieure 33 présentent des hauteurs sensiblement égales et sont situées en vis-à-vis l'une de l'autre.

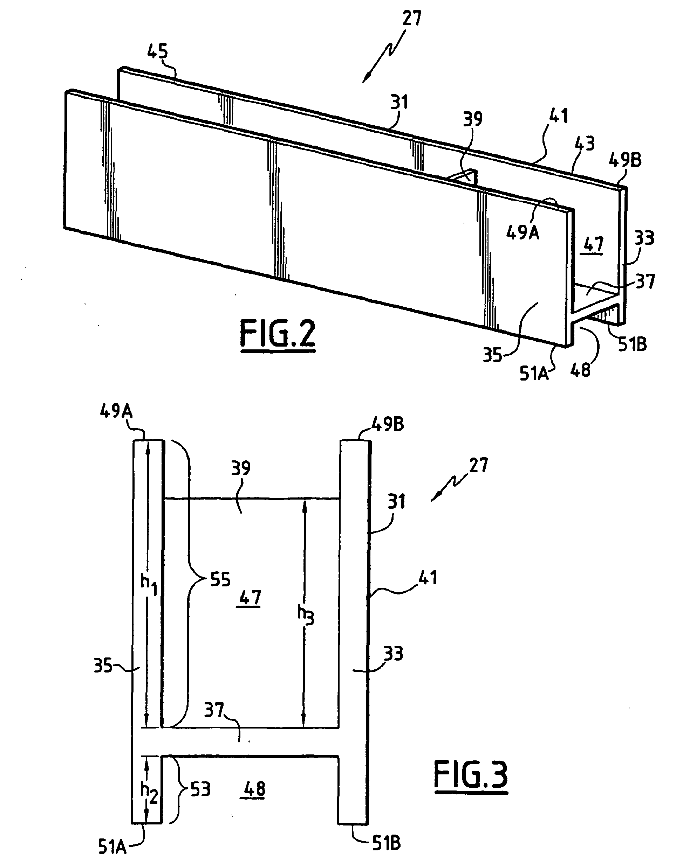

La face arrière 41 de la paroi intérieure 33 est fixée sur les absorbeurs de choc 21 respectifs au voisinage des extrémités gauche et droite 43 et 45 de la poutre 27, visibles sur la Figure 2.

L'âme de rigidification 37 relie la paroi intérieure 33 à la paroi extérieure 35. Elle délimite avec les parois 33 et 35, en section transversale, une cavité supérieure 47 ouverte vers le haut sur toute son étendue entre les extrémités supérieures respectives 49A et 49B des parois extérieure 35 et intérieure 33, et une cavité inférieure 48 ouverte vers le bas sur toute son étendue entre les extrémités inférieures respectives 51A et 51 B des mêmes parois.

Comme illustré par la Figure 3, l'âme de rigidification 37 délimite sur chaque paroi 33, 35 une région inférieure 53 s'étendant jusqu'à l'extrémité inférieure 51A, 51 B des parois 33, 35, et une région supérieure 55 s'étendant jusqu'à l'extrémité supérieure 49A, 49B de ces parois.

Sur chaque paroi 33, 35, la hauteur h₁ de la région supérieure 55 est sensiblement différente de la hauteur h₂ de la région inférieure 53. Dans l'exemple représenté sur la Figure 3, la hauteur h₁ de la région supérieure 55 est nettement supérieure à la hauteur h₂ de la région inférieure, et le rapport h₁/h₂ entre ces hauteurs est supérieur à 1,5.

Comme représenté à la Figure 1, la position verticale de l'âme centrale 37 par rapport au sol est ainsi adaptée pour que l'âme 37 se trouve en regard du genou 57 d'un piéton situé en regard, malgré la hauteur relativement grande des longerons 13 par rapport au sol 23.

Dans cet exemple, l'âme centrale 37 s'étend par ailleurs sous les longerons 13.

En référence à la Figure 3, les nervures 39 s'étendent sensiblement verticalement entre la paroi extérieure 35 et la paroi intérieure 33 dans la cavité supérieure 47. Ces nervures présentent une hauteur h₃ inférieure à la hauteur h₁ des régions supérieures 55.

Comme illustré par la Figure 1, la peau 29 a une section transversale en forme de C s'ouvrant vers l'arrière. La partie supérieure 59 de la peau 29 est fixée sur les extrémités supérieures 49 des parois 33, 35 et obture par le haut la cavité supérieure 47. De même, la partie inférieure 61 de la peau 29 est fixée sur les extrémités inférieures 51 des parois 33, 35 et obture par le bas la cavité inférieure 48.

Une poutre 27 de structure identique à celle montée sur le véhicule 11 représenté à la Figure 1 est montée sur le châssis 25 du véhicule 63 représenté à la Figure 4. Ce véhicule est par exemple de type « coupé ».

Le châssis 25 présente une structure analogue à celui représenté sur la Figure 1. Toutefois, les longerons 13 sont situés à une hauteur par rapport au sol plus faible que les longerons 13 du châssis 11 représenté à la Figure 1.

Par ailleurs, la poutre 27 est montée dans une configuration retournée par rapport à celle de la Figure 1, sans modification des plaques de fixation 19 ou des absorbeurs de chocs 21. Sur chaque paroi 33, 35, la hauteur h₂ de la région supérieure 55 est donc nettement inférieure à la hauteur h₁ de la région supérieure 53. Ainsi, pour le châssis 25 représenté à la Figure 4, la position verticale de l'âme de rigidification 37 par rapport au sol est sensiblement identique à celle de l'âme 37 pour le châssis 11 représenté sur la Figure 1. L'âme 37 est donc également disposée en regard du genou 57 du piéton, mais cette fois au-dessus du longeron 13.

Grâce à l'invention qui vient d'être décrite, il est donc possible de monter des poutres 27 de pare-chocs de structures identiques sur au moins deux types de véhicules présentant des châssis 11, 25 de hauteurs différentes, sans modifier le type de fixation de la poutre 27 sur le châssis et en maintenant l'âme centrale 37 à une hauteur sensiblement constante par rapport au sol 23.

Par suite, les poutres 27 sont fabriquées en plus grandes séries, et leur coût peut être diminué.

En variante, la hauteur de la paroi extérieure 35 est différente de la hauteur de la paroi intérieure 33.

Dans une autre variante, l'âme 37 délimite sur la paroi extérieure 35 une région inférieure 55 et une région supérieure 53 sensiblement de même hauteur.

## Revendications

1. Poutre (27) pour pare-chocs (17) de véhicule automobile, du type comprenant un profilé d'absorption d'énergie mécanique de choc, orienté transversalement par rapport au véhicule, de section transversale en forme générale de H, le profilé (31) comprenant :
- une paroi extérieure (35) sensiblement verticale ;
- une paroi intérieure (33) sensiblement verticale, destinée à être fixée sur la caisse (13) du véhicule; et
- une âme (37) de rigidification sensiblement horizontale reliant lesdites parois (33, 35), et délimitant en section transversale, avec lesdites parois (33, 35), deux cavités (47, 48) ouvertes respectivement vers le haut et vers le bas sur sensiblement toute leur étendue entre les parois (33, 35) ;
l'âme (37) délimitant sur chacune desdites parois (33, 35) :
- une région inférieure (53) s'étendant jusqu'à l'extrémité inférieure (51A, 51B) de ladite paroi (33, 35) ; et
- une région supérieure (55) s'étendant jusqu'à l'extrémité supérieure (49A, 49B) de ladite paroi (33, 35) ;
dans laquelle pour au moins une desdites parois (33, 35), la hauteur (h₁) de la région supérieure (55) est sensiblement différente de la hauteur (h₂) de la région inférieure (53), pour permettre par retournement le montage de la poutre (27) sur au moins deux types de véhicules (11, 63) présentant des châssis de hauteurs différentes, en maintenant sensiblement l'âme centrale (37) à la même hauteur,
**caractérisée en ce que**, pour au moins une desdites parois (33, 35), le rapport de la hauteur (h₂ ; h₁) de l'une des régions inférieure (53) et région supérieure (55), à la hauteur (h₁; h₂) de l'autre desdites régions (55, 53) est supérieur à 1,5.

2. Poutre (27) selon la revendication 1, **caractérisée en ce que**, pour chacune desdites parois (33, 35), la hauteur (h₁) de la région supérieure (55) est sensiblement différente de la hauteur (h₂) de la région inférieure (53).

3. Poutre (27) selon l'une quelconque des revendications précédentes, **caractérisée en ce que** les parois intérieure (33) et extérieure (35) présentent des hauteurs sensiblement égales.

4. Poutre (27) selon l'une quelconque des revendications précédentes, **caractérisée en ce que** le profilé (31) comprend au moins une nervure (39) de renfort sensiblement verticale reliant la paroi extérieure (35) à la paroi intérieure (33) dans l'une desdites cavités (47, 48).

5. Poutre (27) selon l'une quelconque des revendications 1 à 4, **caratérisée en ce que** le profilé (31) est adapté pour être fixé à un châssis (11 ; 25) de véhicule automobile avec l'âme (37) située sélectivement soit au-dessous soit au-dessus des longerons (13).

6. Poutre (27) selon l'une quelconque des revendications précédentes, **caractérisée en ce que** la paroi extérieure (35) et la paroi intérieure (33) sont parallèles et strictement perpendiculaires à l'âme de rigidification (37).

7. Châssis (11 ; 25) de véhicule automobile comprenant deux longerons (13) et un pare-chocs (17) fixé sur les longerons (13), **caractérisé en ce que** le pare-chocs (17) comprend une poutre (27) selon l'une quelconque des revendications précédentes.

8. Procédé de montage d'au moins deux véhicules (11, 63) présentant des châssis (25) de hauteurs différentes, le procédé comprenant une étape de fixation d'une première poutre (27) selon l'une quelconque des revendications 1 à 6, sur le châssis d'un premier véhicule (11), et une étape de fixation d'une deuxième poutre (27) identique à la première poutre (27) sur le châssis (25) d'un deuxième véhicule (63) présentant une hauteur différente de celle du châssis (25) du premier véhicule (11), la deuxième poutre (27) étant montée dans une configuration retournée par rapport à la première poutre (27).

## Claims

1. Beam (27) for the bumper (17) of a motor vehicle, of the type comprising a section for absorbing the mechanical energy of impact, oriented transversely with respect to the vehicle, of a generally H-shaped cross-section, the section (31) comprising:
- a substantially vertical outer wall (35);
- a substantially vertical inner wall (33), adapted to be fixed to the body (13) of the vehicle; and
- a substantially horizontal reinforcement core (37) connecting said walls (33, 35) and delimiting in cross-section, with said walls (33, 35), two cavities (47, 48) which open upwards and downwards, respectively, over substantially their full extent between the walls (33, 35);
the core (37) delimiting on each of said walls (33, 35);
- a lower region (53) extending to the lower end (51A, 51B) of said wall (33, 35); and
- an upper region (55) extending to the upper end (49A, 49B) of said wall (33, 35);
wherein, for at least one of said walls (33, 35), the height (h₁) of the upper region (55) is substantially different from the height (h₂) of the lower region (53), to allow the beam (27) to be mounted on at least two types of vehicles (11, 63), with chassis of different heights, by reversing it, while keeping the central core (37) at substantially the same height,
**characterised in that**, for at least one of said walls (33, 35), the ratio of the height (h₂ ; h₁) of one of the lower (53) and upper (55) regions to the height(h₁ ; h₂) of the other of said regions (55, 53) is greater than 1.5.

2. Beam (27) according to claim 1, **characterised in that** for each of said walls (33, 35) the height (h₁) of the upper region (55) is substantially different from the height (h₂) of the lower region (53).

3. Beam (27) according to any one of the preceding claims, **characterised in that** the inner (33) and outer (35) walls are substantially equal in height,

4. Beam (27) according to any one of the preceding claims, **characterised in that** the section (31) has at least one substantially vertical strengthening rib (39) connecting the outer wall (35) to the inner wall (33) in one of said cavities (47,48).

5. Beam (27) according to any one of claims 1 to 4, **characterised in that** the section (31) is adapted to be fixed to a chassis (11, 25) of a motor vehicle with the core (37) located either below or above the side members (13), as selected.

6. Beam (27) according to any one of the preceding claims, **characterised in that** the outer wall (35) and the inner wall (33) are parallel and strictly perpendicular to the reinforcement core (37).

7. Chassis (11, 25) of a motor vehicle, comprising two side members (13) and a bumper (17) fixed to the side members (13), **characterised in that** the bumper (17) comprises a beam (27) according to any one of the preceding claims.

8. Process for assembling at least two vehicles (11, 63) having chassis (25) of different heights, the process comprising a step of fixing a first beam (27) according to any one of claims 1 to 6 to the chassis of a first vehicle (11), and a step of fixing a second beam (27) identical to the first beam (27) to the chassis (25) of a second vehicle (63) having a different height from the chassis (25) of the first vehicle (11), the second beam (27) being mounted in a reversed configuration compared with the first beam (27).

## Patentansprüche

1. Träger (27) für Kraftfahrzeug-Stoßfänger (17) des Typs, der ein Profil für die Absorption von mechanischer Stoßenergie enthält, das in Bezug auf das Fahrzeug quer orientiert ist und einen transversalen Querschnitt mit einer allgemeinen H-Form besitzt, wobei das Profil (31) umfasst:
- eine im Wesentlichen vertikale Außenwand (35);
- eine im Wesentlichen vertikale Innenwand (33), die dazu bestimmt ist, an der Karosserie (13) des Fahrzeugs befestigt zu werden; und
- einen im Wesentlichen horizontalen Versteifungskern (37), der die Wände (33, 35) verbindet und im transversalen Schnitt mit den Wänden (33, 35) zwei Hohlräume (47, 48) begrenzt, die im Wesentlichen auf ihrer gesamten Erstreckung zwischen den Wänden (33, 35) nach oben bzw. nach unten offen sind;
wobei der Kern (37) an jeder der Wände (33, 35) begrenzt:
- einen unteren Bereich (53), der sich bis zum unteren Ende (51A, 51B) der Wand (33, 35) erstreckt; und
- einen oberen Bereich (55), der sich bis zum oberen Ende (49A, 49B) der Wand (33, 35) erstreckt;
wobei wenigstens für eine der Wände (33, 35) die Höhe (h₁) des oberen Bereichs (55) von der Höhe (h₂) des unteren Bereichs (53) wesentlich verschieden ist, um durch Umdrehen die Montage des Trägers (22) an wenigstens zwei Typen von Fahrzeugen (11, 63), die Rahmen mit unterschiedlichen Höhen aufweisen, zu ermöglichen, wobei der zentrale Kern (37) im Wesentlichen auf derselben Höhe gehalten wird,
**dadurch gekennzeichnet, dass** für wenigstens eine der Wände (33, 35) das Verhältnis der Höhe (h₂; h₁) des unteren Bereichs (53) oder des oberen Bereichs (55) zu der Höhe (h₁; h₂) des anderen der Bereiche (55, 53) größer als 1,5 ist.

2. Träger (27) nach Anspruch 1, **dadurch gekennzeichnet, dass** für jede der Wände (33, 35) die Höhe (h₁) des oberen Bereichs (55) von der Höhe (h₂) des unteren Bereichs (53) wesentlich verschieden ist.

3. Träger (27) nach einem der vorhergehenden Ansprüche, **dadurch gekennzeichnet, dass** die innere Wand (33) und die äußere Wand (35) im Wesentlichern gleiche Höhen aufweisen.

4. Träger (27) nach einem der vorhergehenden Ansprüche, **dadurch gekennzeichnet, dass** das Profil (31) wenigstens eine im Wesentlichen vertikale Verstärkungsrippe (39) aufweist, die die äußere Wand (35) mit der inneren Wand (33) in einem der Hohlräume (47, 48) verbindet.

5. Träger (27) nach einem der Ansprüche 1 bis 4, **dadurch gekennzeichnet, dass** das Profil (31) ausgelegt ist, um an einem Rahmen (11; 25) des Kraftfahrzeugs befestigt zu werden, wobei sich der Kern (37) wahlweise entweder unterhalb oder oberhalb von Längsträgern (13) befindet.

6. Träger (27) nach einem der vorhergehenden Ansprüche, **dadurch gekennzeichnet, dass** die äußere Wand (35) und die innere Wand (33) parallel und zum Versteifungskern (37) genau senkrecht sind.

7. Rahmen (11; 25) für Kraftfahrzeug, der zwei Längsträger (13) und einen an den Längsträgern (13) befestigten Stoßfänger (17) umfasst, **dadurch gekennzeichnet, dass** der Stoßfänger (17) einen Träger (27) nach einem der vorhergehenden Ansprüche umfasst.

8. Verfahren zur Montage von wenigstens zwei Fahrzeugen (11, 63), die Rahmen (25) mit unterschiedlichen Höhen besitzen, wobei das Verfahren einen Schritt des Befestigens eines ersten Trägers (27) nach einem der Ansprüche 1 bis 6 am Rahmen eines ersten Fahrzeugs (11) und einen Schritt des Befestigens eines zweiten Trägers (27), der mit dem ersten Träger (27) völlig übereinstimmt, am Rahmen (25) eines zweiten Fahrzeugs (63), das eine von der Höhe des Rahmens (25) des ersten Fahrzeugs (11) verschiedene Höhe aufweist, umfasst, wobei der zweite Träger (27) in einer in Bezug auf den ersten Träger (27) umgedrehten Konfiguration montiert wird.
